# DEMANDE DE BREVET EUROPEEN

(11) **EP 0 980 820 A1**
(43) Date de publication de la demande: **23.02.2000**
(21) Numéro de dépôt: 99410098.0
(22) Date de dépôt: 13.08.1999
(51) Int. Cl.: B62K 13/02, B62K 27/12

(54) **Dispositif de raccordement de deux cycles par une liaison mécanique articulée et réglable**

(30) Priorité: 20.08.1998 FR 9810661; 19.11.1998 FR 9814731
(71) Demandeur: Clerc, Pierre, 38570 Goncelin (FR); Ledru, Thierry, 73110 Presle (FR)
(72) Inventeur: Clerc, Pierre, 38570 Goncelin (FR); Ledru, Thierry, 73110 Presle (FR)
(74) Mandataire: Hecké, Gérard

(57) **Abrégé**

Un dispositif de raccordement mécanique de la partie arrière 10 d'un premier cycle 12 à la partie avant d'un deuxième cycle 18 comporte une liaison mécanique 44 télescopique munie de moyens de réglage en hauteur, et d'un palier 56 pour le logement d'un axe 46 horizontal autorisant un mouvement relatif de pivotement des deux cycles 12, 18. Le palier 56 est agencé coaxialement entre la fourche 66 du deuxième cycle 18 par l'intermédiaire de moyens d'assemblage de l'axe 46 à des pattes de sécurité 58 solidaires des deux jambes de la fourche 66.

## Description

### Domaine technique de l'invention

L'invention est relative à un dispositif de raccordement mécanique de la partie arrière d'un premier cycle à la partie avant d'un deuxième cycle après enlèvement de la roue avant de ce demier, le premier cycle pour adulte ayant un cadre plus grand que celui du deuxième cycle destiné à un enfant, ledit dispositif comportant une barre d'accouplement fixée à l'une des extrémités au cadre du premier cycle par un premier organe de fixation, et à l'extrémité opposée au cadre du deuxième cycle par un deuxième organe de fixation.

Les deux cycles sont des vélos standards, il suffit de retirer la roue avant du deuxième cycle pour enfant, et de mettre en place la barre d'accouplement intermédiaire.

### Etat de la technique antérieure

Des dispositifs de raccordement à barres d'accouplement sont décrits dans les documents EP-A-8982, 716008 et FR-A-2721893, 2710604, et 2570343. Ils permettent tous d'atteler un vélo adulte à un vélo enfant pour réaliser un genre de tandem à trois roues. Un adulte peut ainsi véhiculer un enfant en toute sécurité, et les vélos se déplacent à la même vitesse, l'enfant pouvant participer à l'effort de pédalage, ou se reposer en roue libre. Ces dispositifs connus font usage de cardans ou de liaisons rigides pour l'accouplement des deux vélos. Les inconvénients rencontrés concernent principalement la stabilité latérale de l'ensemble dans les courbes ou sur un sol en mauvais état, et l'adaptabilité de la barre d'accouplement à tous les types de vélos de différentes tailles.

### Objet de l'invention

L'objet de l'invention consiste à réaliser un dispositif de raccordement mécanique standard et facilement ajustable en fonction de la taille et du type des cycles à accoupler.

Le dispositif de raccordement selon l'invention est caractérisé en ce qu'il comporte de plus une liaison mécanique articulée composée de moyens de réglage en hauteur solidaires de l'extrémité inférieure de la barre d'accouplement, et de moyens de support d'un axe horizontal s'étendant perpendiculairement au plan médian vertical pour autoriser un mouvement relatif de pivotement des deux cycles.

Selon un premier mode de réalisation préférentiel, le palier de la liaison mécanique télescopique est agencé coaxialement entre la fourche du deuxième cycle. Les moyens d'assemblage comportent une entretoise traversée par l'axe, et prenant appui sur la patte de sécurité du côté correspondant par l'action de blocage d'au moins un écrou. L'écrou est séparé de chaque extrémité de la douille tubulaire du palier par un jeu axial, autorisant un mouvement relatif de rotation entre le palier et l'axe, ce dernier étant bloqué axialement à l'extérieur de la fourche par des deuxièmes écrous d'extrémités.

Selon une caractéristique de l'invention, le premier dispositif de fixation comprend une pièce d'attache articulée sur un pivot horizontal, et coopérant avec un collier de serrage pouvant être positionné, soit sur un tube du cadre, soit sur le tube de selle.

La première partie des moyens de réglage de la liaison mécanique comporte une tige télescopique, insérée coaxialement à l'intérieur de l'extrémité inférieure de la barre d'accouplement, et portant un palier tubulaire à l'extrémité saillante, la tige rectiligne étant dotée d'une série d'orifices échelonnés à intervalles réguliers le long de la direction axiale de réglage, l'un des orifices étant destiné à être mis en regard avec au moins un trou ménagé dans la barre d'accouplement, de manière à autoriser le passage d'une goupille de blocage.

Selon un deuxième mode de réalisation, la deuxième partie de la liaison mécanique comporte une bride en forme de U équipée de deux pattes enfourchant le palier pour constituer ladite articulation, chaque patte de la bride est pourvue d'un trou aligné avec l'alésage du palier pour autoriser le passage de l'axe dans la direction transversale. Une paire de mâchoires de serrage est montée sur la face d'appui plane de la bride, avec un écartement transversal ajustable à la dimension de la fourche avant du deuxième cycle, la face d'appui étant munie de deux trous oblongs pour le passage de boulons d'assemblage autorisant le réglage des mâchoires.

### Description sommaire des dessins

D'autres avantages et caractéristiques ressortiront plus clairement de la description qui va suivre d'un mode de réalisation de l'invention, donné à titre d'exemple non limitatif, et représenté aux dessins annexés, dans lesquels :
- la figure 1 est une vue schématique de deux cycles interconnectés par l'intermédiaire du dispositif de raccordement selon l'invention ;
- la figure 2 montre une vue en élévation du premier dispositif de fixation de la barre d'accouplement au premier cycle ;
- la figure 3 représente une vue de dessus du premier dispositif de fixation de la figure 2 ;
- la figure 4 est une vue en coupe du deuxième dispositif de fixation de la barre d'accouplement du deuxième cycle ;
- la figure 5 est une vue identique de la figure 1 d'une variante de réalisation;
- la figure 6 montre une vue en coupe de la première partie de la liaison mécanique articulée de la figure 5;
- la figure 7 représente une vue en coupe de la deuxième partie de la liaison mécanique articulée de la figure 5.

### Description d'un mode de réalisation préférentiel

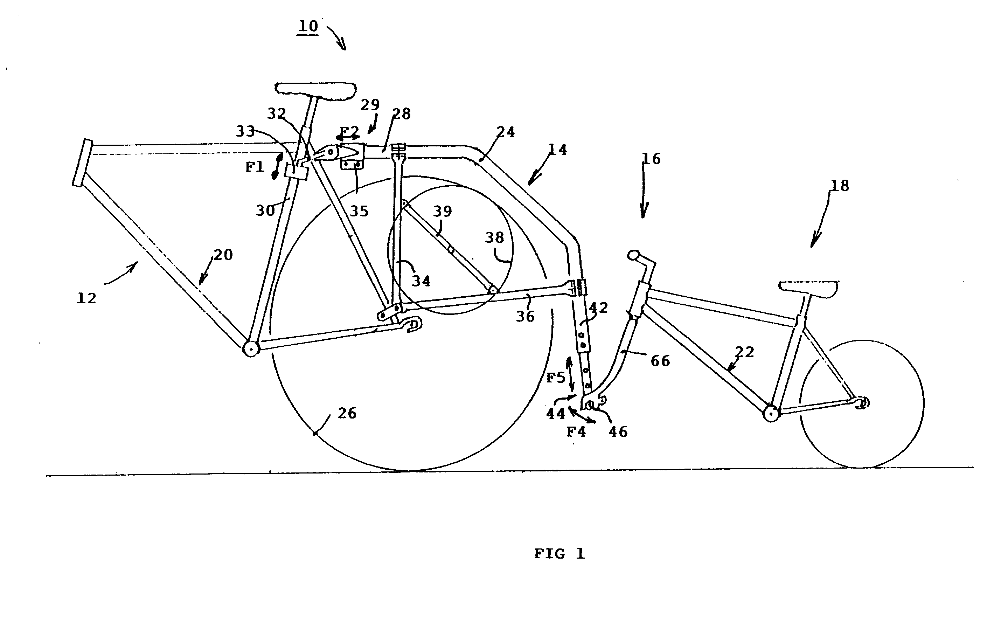

Sur la figure 1, la partie arrière 10 d'un premier cycle 12 est reliée par un dispositif de raccordement 14 à la partie avant 16 d'un deuxième cycle 18 après enlèvement de la roue avant de ce dernier. Le premier cycle 12 antérieur est prévu pour un adulte, et présente un cadre 20 plus grand que celui 22 du deuxième cycle 18 postérieur destiné à un enfant.

Le dispositif de raccordement 14 est formé par une barre d'accouplement 24 tubulaire cintrée vers le bas, et s'étendant dans le plan médian vertical du cadre 20, au-dessus de la roue arrière 26 du premier cycle 12.

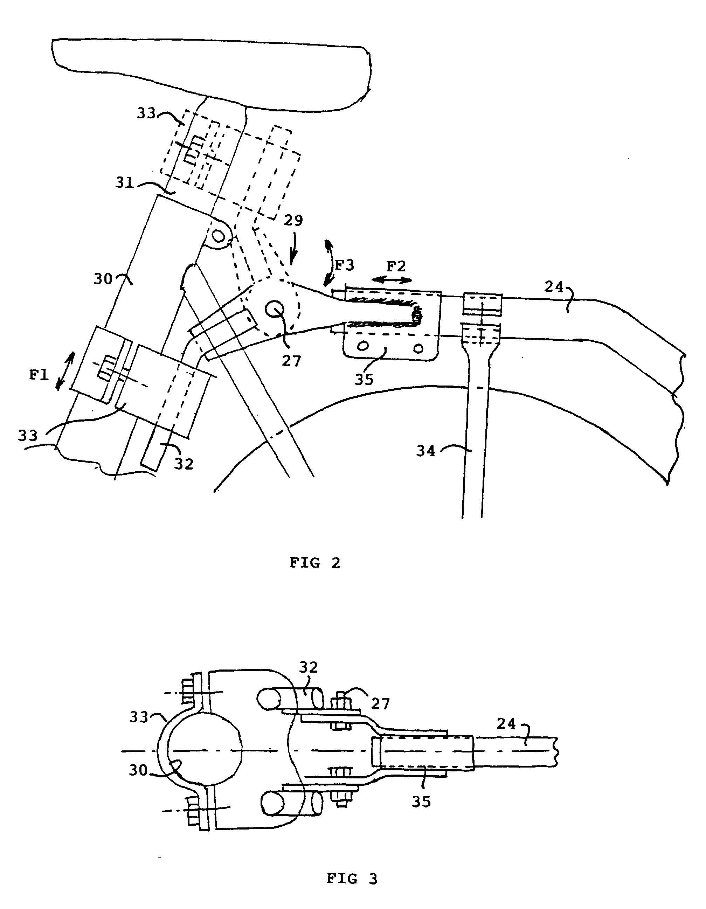

Sur les figures 2 et 3, l'extrémité supérieure 28 de la barre d'accouplement 24 est fixée par un premier dispositif de fixation 29 au cadre 20.

Le premier dispositif de fixation 29 comporte une pièce d'attache 32 articulée sur un pivot 27 horizontal, et coopérant avec un collier 33 de serrage pouvant être positionné soit sur le tube 30 du cadre 20 (en traits pleins sur la figure 2), soit sur le tube de selle 31 (en pointillé). Le collier 33 est déplaçable le long du tube 30 dans la direction verticale de la flèche F1, et la pièce d'attache 32 peut pivoter autour du pivot 27 dans le sens de la flèche F3. Un arrêt 35 solidarise la pièce d'attache 32 à la barre d'accouplement 24 avec une possibilité de réglage longitudinal dans la direction F2. Après ajustage, le collier 33 et l'arrêt 35 sont ensuite serrés définitivement pour constituer une liaison rigide.

L'articulation de la pièce d'attache 32 permet de maintenir la partie supérieure de la barre d'accouplement 24 à l'horizontal, indépendamment du type et de la taille du cadre 20, et de l'inclinaison du tube de selle 31.

La partie intermédiaire de la barre d'accouplement 24 est supportée par deux étriers 34, 36 de renforcement assujettis au cadre 20 au voisinage de l'axe de la roue arrière 26. La roue avant 38 du deuxième cycle 18 est avantageusement fixée par son axe sur un support 39 assujetti aux deux étriers 34, 36. Le transport de la roue avant 38 sur le support 39 permet d'effectuer à tout moment le remontage du deuxième cycle 18 après désaccouplement de la barre d'accouplement 24.

L'extrémité inférieure 42 de la barre d'accouplement 24 est équipée d'une liaison mécanique 44 articulée et réglable en hauteur en fonction de la taille du cadre 22 du deuxième cycle 18 postérieur. L'articulation est obtenue au moyen d'un axe 46 horizontal autorisant un mouvement de pivotement relatif dans le sens de la flèche F4 de la barre d'accouplement 24 par rapport à la partie avant 16 du deuxième cycle 18.

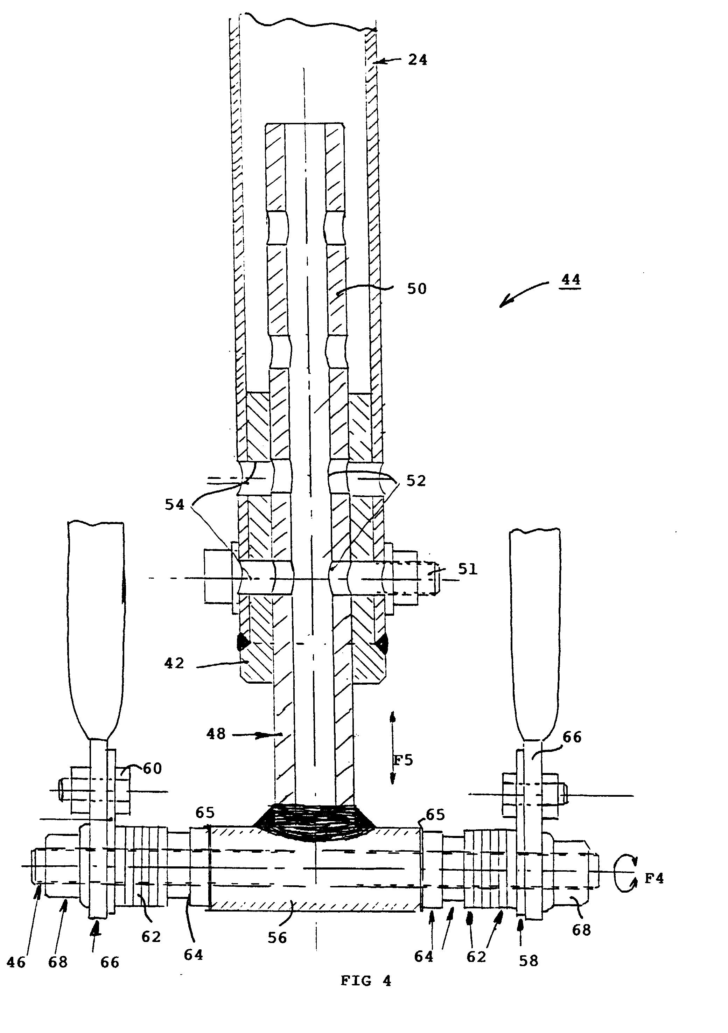

Sur la figure 4, la liaison mécanique 44 comporte une première partie 48 télescopique pour le réglage en hauteur de l'articulation. La première partie 48 est pourvue d'une tige 50 rectiligne percée diamétralement de plusieurs orifices 52 échelonnés à intervalles réguliers dans la direction axiale. La tige 50 est insérée coaxialement à l'intérieur de l'extrémité inférieure 42 tubulaire de la barre d'accouplement 24, laquelle est munie d'une paire de trous 54 destinés à être mis en regard avec l'un des orifices 52 lors de la phase de réglage en translation indiquée par la flèche F5. La première partie 48 télescopique est ensuite bloquée au moyen d'une goupille ou boulon 51 traversant les trous 54 et un orifice 52 prédéterminé. Le bout externe de la tige 50 est soudé à un palier 56 en forme de douille tubulaire s'étendant axialement dans l'intervalle transversal entre les jambes de la fourche avant 66 du deuxième cycle 18.

Un deuxième dispositif de fixation 65 permet de fixer le palier 46 à la fourche 66 du deuxième cycle 18.

La douille constituant le palier 56 de l'axe 46 peut recevoir différents types de fourches 66 ayant une largeur pouvant aller de 80 à 100mm. Chaque jambe de la fourche 66 est équipée d'une patte de sécurité 58 fixée par un boulon de blocage 60 à la jambe.

L'adaptation du palier 56 à l'écartement transversal de la fourche 66 s'effectue au moyen d'entretoises 62 constituées par un empilage de rondelles. Le mouvement relatif de rotation du palier 56 par rapport à l'axe 46 est obtenu en bloquant par des premiers écrous 64, les rondelles entretoises 62 contre la patte de sécurité 58 de chaque côté, en ménageant un jeu 65 axial avec le palier 56.

L'axe 46 est bloqué axialement à l'extérieur de la fourche 66 par des deuxièmes écrous d'extrémités 68. Le réglage en hauteur de l'axe 46 s'opère par le positionnement télescopique de la tige 50 dans l'extrémité 42 tubulaire de la barre d'accouplement 24

Le dispositif de raccordement 14 selon l'invention peut être réalisé en un matériau métallique, notamment en aluminium, en fer, ou en acier inoxydable.

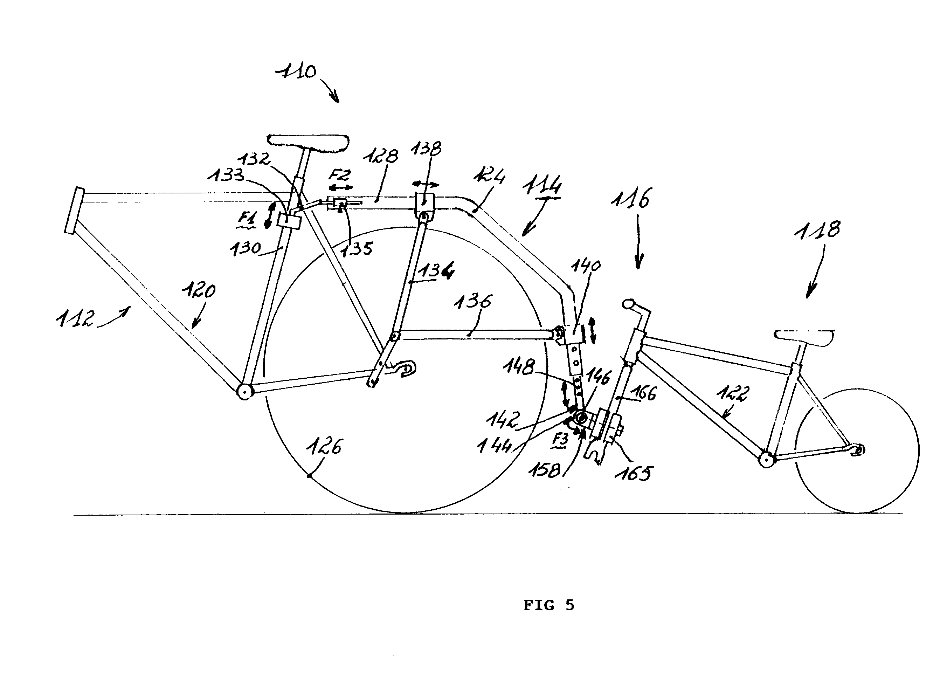

Sur la variante de la figure 5, le dispositif de raccordement 114 est formé par une barre d'accouplement 124 tubulaire cintrée vers le bas, et s'étendant dans le plan médian vertical du cadre 120, au-dessus de la roue amère 126 du premier cycle 112. L'extrémité supérieure 128 de la barre d'accouplement 24 est fixée par un premier organe de fixation 132 au tube de selle 130 formé par le tube montant du cadre 120. L'ajustage de ce dernier s'effectue à titre d'exemple, au moyen d'un collier 133 déplaçable le long du tube de selle 130 dans la direction de la flèche F1, et d'un arrêt 135 pour le réglage longitudinal dans la direction F2. Le collier 133 et l'arrêt 135 sont ensuite serrés dans une position prédéterminée pour constituer une liaison rigide.

Pour augmenter la rigidité mécanique, la partie intermédiaire de la barre d'accouplement 124 est supportée par deux étriers 134, 136 de renforcement assujettis au cadre 120 au voisinage de l'axe de la roue amère 126. La liaison d'assemblage des étriers 134, 136 avec la barre d'accouplement 124 peut également être opérée au moyen de colliers de serrage 138, 140 ajustables.

L'extrémité inférieure 142 de la barre d'accouplement 124 est équipée d'une liaison mécanique 144 articulée et réglable en hauteur en fonction de la taille du cadre 122 du deuxième cycle 118 postérieur. L'articulation est obtenue au moyen d'un axe 146 horizontal autorisant un mouvement de pivotement relatif dans le sens de la flèche F3 de la barre d'accouplement 124 par rapport à la partie avant 116 du deuxième cycle 118.

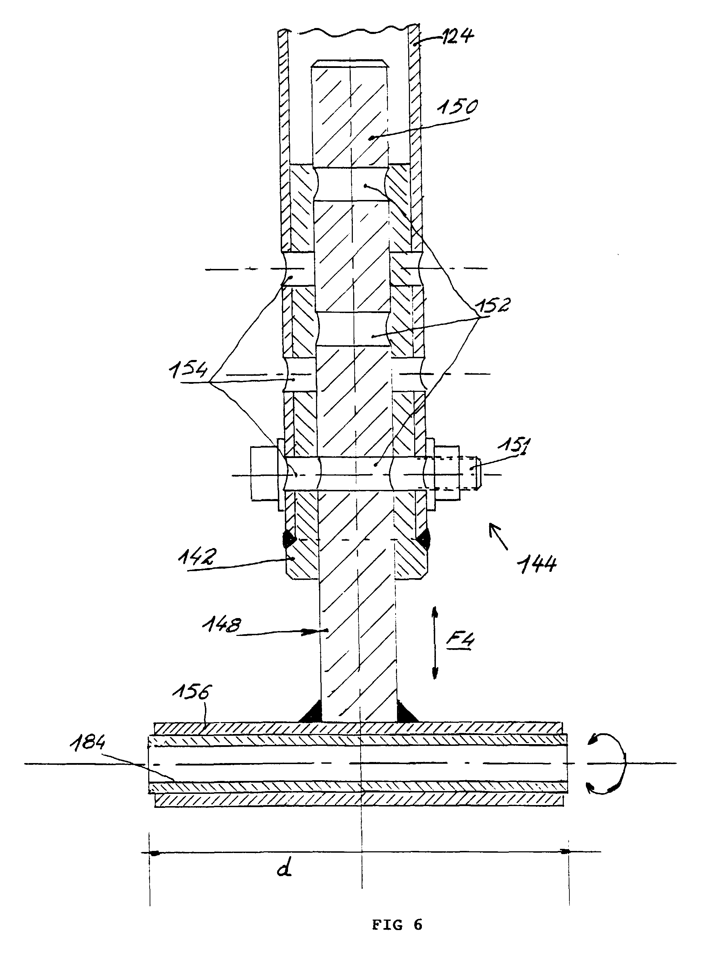

Sur la figure 6, la liaison mécanique 144 comporte une première partie 148 téléscopique pour le réglage en hauteur de l'articulation. La première partie 148 est pourvue d'une tige 150 rectiligne percée diamétralement de plusieurs orifices 152 échelonnés à intervalles réguliers dans la direction axiale. La tige 150 est insérée coaxialement à l'intérieur de l'extrémité inférieure 142 de la barre d'accouplement 124, laquelle est munie d'une paire de trous 154 destinés à être mis en regard avec l'un des orifices 152 lors de la phase de réglage en translation indiquée par la flèche F4. La première partie 148 téléscopique est ensuite bloquée en translation et en rotation au moyen d'une goupille ou boulon 151 traversant les trous 154 et un orifice 152 prédéterminé. Le bout externe de la tige 150 est soudée à un palier 156 tubulaire s'étendant dans la direction transversale parallèle à l'axe de la roue 126.

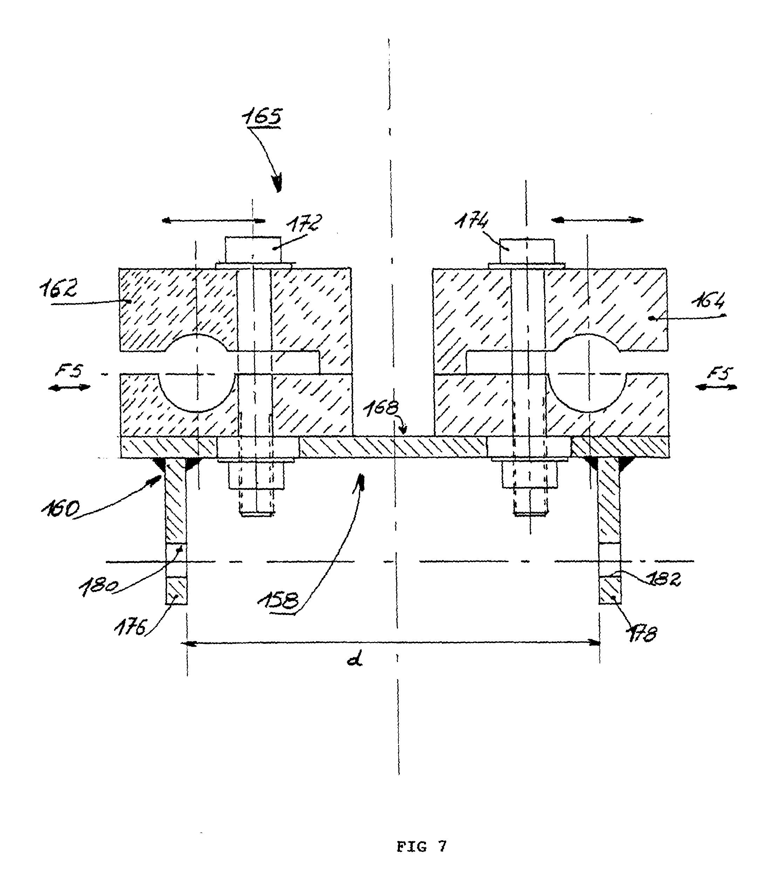

En référence à la figure 7, la deuxième partie 158 de la liaison mécanique 144 comporte une bride 160 en forme de U, servant de support à deux mâchoires de serrage 162, 164 destinés à être solidarisées aux jambes de la fourche avant 166 du cadre 122 pour constituer le deuxième organe de fixation 165 de la barre d'accouplement. Les mâchoires 162, 164 sont portées par la face d'appui 168 plane de la bride 160, laquelle est munie de trous 170 oblongs pour le passage d'une paire de boulons d'assemblage 172, 174. L'écartement transversal entre les deux mâchoires 162, 164 peut ainsi être ajusté systématiquement à la dimension de la fourche avant 166 du deuxième cycle 118.

Les extrémités opposées de la bride 160 comporte deux pattes 176, 178 en équerre, séparées transversalement l'une de l'autre par une distance d légèrement supérieure à la longueur du palier 156 tubulaire. Chaque patte 176, 178 est percée par un trou 180, 182 sensiblement de même diamètre que celui de l'alésage 184 du palier 156.

Pour constituer l'articulation de la liaison mécanique 144, il suffit d'enfourcher la bride 160 de la deuxième partie 158 sur le palier 156 de la première partie 148 en alignant les trous 180, 182 avec l'alésage 184 dans la direction transversale, et d'insérer ensuite l'axe 146. Ce dernier est formée par une broche munie avantageusement d'une tête à fixation rapide (non représentée).

Le réglage en hauteur de l'axe 146 s'opère par le positionnement téléscopique de la tige 150 dans l'extrémité 142 tubulaire de la barre d'accouplement 124 . Le raccordement final intervient par la fixation des mâchoires 162, 164 sur la fourche avant 166 du deuxième cycle 118, et le serrage du collier 133 sur le tube de selle 130 du premier cycle 112.

Une telle liaison mécanique dans le dispositif de raccordement permet d'obtenir une excellente stabilité latérale des deux vélos accouplés, tout en autorisant un mouvement relatif de pivotement, d'axe perpendiculaire au plan médian vertical.

Il est clair que la partie intermédiaire de la barre d'accouplement 124 peut servir de support pour divers accessoires, notamment un porte-bidon, un porte-fanion, un porte-bagages, un système d'attache de la roue avant du deuxième cycle 118, etc..

## Revendications

1. Dispositif de raccordement mécanique de la partie amère (10, 110) d'un premier cycle (12, 112) à la partie avant d'un deuxième cycle (18, 118) après enlèvement de la roue avant de ce dernier, le premier cycle (12, 112) pour adulte ayant un cadre (20, 120) plus grand que celui (22, 122) du deuxième cycle (18, 118) destiné à un enfant, ledit dispositif comportant une barre d'accouplement (24, 124) fixée à l'une des extrémités (28, 128) au cadre (20, 120) du premier cycle (12, 112) par un premier organe de fixation (32, 132), et à l'extrémité opposée (42, 142) au cadre (22, 122) du deuxième cycle (18, 118) par un deuxième organe de fixation (65, 165),
caractérisé en ce qu'il comporte de plus une liaison mécanique (44, 144) articulée composée de moyens de réglage en hauteur solidaires de l'extrémité (42, 142) inférieure de la barre d'accouplement (24, 124), et de moyens de support d'un axe (46, 146) horizontal s'étendant perpendiculairement au plan médian vertical pour autoriser un mouvement relatif de pivotement des deux cycles (12, 18 ; 1 12, 118).

2. Dispositif de raccordement mécanique selon la revendication 1, caractérisé en ce que le palier (56) de la liaison mécanique (44) télescopique est agencé coaxialement entre la fourche (66) du deuxième cycle (18).

3. Dispositif de raccordement mécanique selon la revendication 2, caractérisé en ce que le deuxième dispositif de fixation (65) comporte des moyens d'assemblage de l'axe (46) à des pattes de sécurité (58) solidaires des deux jambes de la fourche (66), les moyens d'assemblage comportant une entretoise (62) traversée par l'axe (46), et prenant appui sur la patte de sécurité (58) du côté correspondant par l'action de blocage d'au moins un premier écrou (64), l'axe (46) étant bloqué axialement à l'extérieur de la fourche (66) par des deuxièmes écrous (68) d'extrémités.

4. Dispositif de raccordement mécanique selon la revendication 3, caractérisé en ce que le premier écrou (64) est séparé de chaque extrémité de la douille tubulaire du palier (56) par un jeu (65) axial, autorisant un mouvement relatif de rotation entre le palier (56) et l'axe (46).

5. Dispositif de raccordement mécanique selon l'une des revendications 1 à 4, caractérisé en ce que le premier dispositif de fixation 29 comprend une pièce d'attache (32) articulée sur un pivot (27) horizontal, et coopérant avec un collier de serrage (33) pouvant être positionné, soit sur un tube (30) du cadre (20), soit sur le tube de selle (31).

6. Dispositif de raccordement mécanique selon la revendication 1 ou 2, caractérisé en ce que la première partie (48, 148) des moyens de réglage de la liaison mécanique (44, 144) comporte une tige (50, 150) télescopique, insérée coaxialement à l'intérieur de l'extrémité (42, 142) inférieure de la barre d'accouplement (24, 124), et portant un palier (56, 156) tubulaire à l'extrémité saillante, la tige (50, 150) rectiligne étant dotée d'une série d'orifices (52, 152) échelonnés à intervalles réguliers le long de la direction axiale de réglage, l'un des orifices (52, 152) étant destiné à être mis en regard avec au moins un trou (54, 154) ménagé dans la barre d'accouplement (24, 124), de manière à autoriser le passage d'une goupille de blocage.

7. Dispositif de raccordement mécanique selon la revendication 1, caractérisé en ce que la deuxième partie (148) de la liaison mécanique (144) comporte une bride (160) en forme de U équipée de deux pattes (176, 178) enfourchant le palier (156) pour constituer ladite articulation, chaque patte (176, 178) de la bride (160) est pourvue d'un trou (180, 182) aligné avec l'alésage (184) du palier (156) pour autoriser le passage de l'axe (146) dans la direction transversale.

8. Dispositif de raccordement mécanique selon la revendication 7, caractérisé en ce que une paire de mâchoires de serrage (162, 164) est montée sur la face d'appui (168) plane de la bride (160), avec un écartement transversal ajustable à la dimension de la fourche avant (166) du deuxième cycle (118), la face d'appui (168) étant munie de deux trous (170) oblongs pour le passage de boulons d'assemblage (172, 174) autorisant le réglage des mâchoires (162, 164).

9. Dispositif de raccordement mécanique selon l'une des revendications 1 à 8, caractérisé en ce que la partie intermédiaire de la barre d'accouplement (24, 124) est cintrée au-dessus de la roue arrière (26, 126) du premier cycle (12, 112), et sert de support à divers accessoires.
